# EUROPEAN PATENT APPLICATION

(11) **EP 1 186 367 A1**
(43) Date of publication of application: **13.03.2002**
(21) Application number: 01121062.2
(22) Date of filing: 03.09.2001
(51) Int. Cl.: B23C 5/10, B23B 27/14, B23B 51/04

(54) **Complex tool**

(30) Priority: 05.09.2000 JP 2000268215; 11.05.2001 JP 2001141540
(71) Applicant: YAMAZAKI MAZAK KABUSHIKI KAISHA, Niwa-gun Aichi-ken (JP)
(72) Inventor: Yamazaki, Tsunehiko, Nagoya-shi, Aichi-ken (JP); Miyazaki, Sadami, Konan-shi, Aichi-ken (JP)
(74) Representative: Bauer, Wulf, Dr.

(57) **Abstract**

In a complex tool to be installed on a machine tool capable of turning machining and milling machining, a main body (21) a is provided, inserts for turning machining (22, 23, 26) are installed on the main body, and inserts for milling machining (22, 25) and inserts for drilling machining (22, 25) are installed on the main body, so that turning machining and drilling/milling machining can be executed by the inserts installed on the main body without tool exchange. Turning machining and drilling/milling machining can be executed without tool exchange, and effective machining is possible, saving time and labor for tool exchange.

## Description

### BACKGROUND OF THE INVENTION

This invention relates to a complex tool which is a tool installed on a complex machining machine tool capable of turning machining and milling machining wherein a plurality of inserts is installed on a single holder portion and turning machining and rotational tool machining, such as drilling/milling machining can be executed with one tool.

In such kind of machine tool, tools are divided into tools for turning machining and tools for drilling/milling machining in the past. And, machining is performed in such a manner that a tool installed on a tool rest is attached or detached so as to exchange, fitting to machining to be performed from now on every change of machining contents.

In such a machine tool, it is necessary to exchange a tool every change of machining contents. Then, the time for tool exchange decreases machining efficiency, inconveniently. Then, a proposal for improving machining efficiency is that the trouble of tool exchange is saved using a complex tool installing a plurality of tools thereon.

But, the diameter of the complex tool is made bigger since a plurality of cutting tools is installed on a cylindrical holder case or so as it is in a conventional complex tool. Besides, there is such a problem that drilling/milling machining is impossible although a plurality of kinds of turning machining is possible.

The object of the present invention is to provide a complex tool having a smaller diameter, capable of a plurality of kinds of turning machining and drilling/milling machining with one tool, taking the above-mentioned circumstances into consideration.

### SUMMARY OF THE INVENTION

The invention of claim 1 is complex tool to be installed on a machine tool capable of executing turning machining and milling machining, comprising:
- a main body in a bar shape, installing inserts on its top end being free to attach and detach;
- a concave portion formed on said main body from an outer peripheral portion of said main body in a direction of an axial center of said main body along said axial center direction from a top end portion of said main body;
- a plurality of insert installation faces formed on said main body, putting said concave portion therebetween; and
- said insert installed on said insert installation face.

In the invention of claim 1, a plurality of insert installation faces is formed in the concave portion formed from the outer peripheral portion of the main body for the direction of the axial center of the main body , putting the concave portion therebetween, and the insert is directly installed on the insert installation face. Then, a plurality of inserts can be located on the main body with high density. Even if a plurality of inserts is installed, the outer diameter of the complex tool can be smaller. Besides, inner diameter machining and end milling machining can be executed from the diameter having smaller hole with the complex tool. Then, efficient machining is possible.

Besides, cutting chip of the two inserts located in the concave portion can be eliminated by one concave portion, thereby the diameter of complex tool can be further made smaller. And, the diameter of the tool can be made smaller, so that the stability of the machining of the complex tool at high speed can be improved.

The invention of claim 2 is the complex tool, wherein a plurality of said concave portions is formed.

In the invention of claim 2, a plurality of concave portions is formed, and a plurality of inserts can be provided with each concave portion. Then, more kinds of machining is possible.

The invention of claim 3 is the complex tool, wherein said inserts located putting said concave portion therebetween are installed on said insert installation portions such that both cutting directions are opposite to each other.

In the invention of claim 3, the inserts located putting the concave portion therebetween are installed on the insert installation portions such that both cutting directions are opposite to each other. Then, the inserts can be located so as to oppose to each other, sharing the concave portion, and location of inserts with high density is possible.

The invention of claim 4 is the complex tool, wherein a recess is formed on said main body for said insert.

In the invention of claim 4, a recess is formed on the main body of the complex tool with respect to the insert. Then, machining is possible with the present complex tool without interference between the insert to be used for machining and a workpiece.

The invention of claim 5 is the complex tool as set forth in claim 2, wherein at least two inserts having the same cutting direction, of a plurality of said inserts located on a plurality of said concave portions are provided such that their top edges are located with equal distance with respect to said axial center of said main body.

In the invention of claim 5, drilling machining of the diameter corresponding to the tool edge distance of at least two inserts is possible, making use of at least two inserts located with equal distance. Besides, milling machining is also possible, efficiently making use of a plurality of inserts.

The invention of claim 6 is the complex tool as set forth in claim 2, wherein said insert is located such that a top edge of said insert offsets to said concave portion side a predetermined distance from a radial face with said axial center of said main body as its center.

In the invention of claim 6, the insert is located, offsetting on the concave portion side a predetermined distance on a radial face with the axial center of the main body of the complex tool as its center. Then, the thickness of the main body portion for installing the insert can be made thicker so as to endure the stress generating at the time of machining. Therefore, chatter can be prevented.

The invention of claim 7 is the complex tool as set forth in claim 4, wherein a plurality of said recesses is formed per one insert.

In the invention of claim 7, a plurality of the recesses is formed for each insert. Then, a plurality of different machining corresponding to the recesses can be set for each insert, and various kinds of machining is possible.

The invention of claim 8 is the complex tool as set forth in claim 4, wherein said recesses include a recess formed on said top end of said main body, hollowing a central portion of said main body.

In the invention of claim 8, the recess is formed on the top end of the main body, hollowing a central portion of the main body. Then, the recess helps elimination of chips at the time of drilling machining or milling machining, and smooth machining is possible.

The invention of claim 9 is complex tool to be installed on a machine tool capable of executing turning machining and milling machining, comprising:
- a main body;
- an insert for turning machining installed on said main body; and
- an insert for milling machining installed on said main body;
- whereby both turning machining and milling machining can be executed by said inserts installed on said main body without exchanging tools.

In the invention of claim 9, turning machining is possible with the insert for turning machining installed on the main body and milling machining is possible with the insert for milling machining. Then, both turning and milling machining can be executed without tool exchange, and efficient machining is possible, saving trouble and time for tool exchange.

The invention of claim 10 is complex tool to be installed on a machine tool capable of executing turning machining and drilling machining by rotating tool, comprising:
- a main body;
- an insert for turning machining installed on said main body; and
- an insert for drilling machining installed on said main body;
- whereby both turning machining and drilling machining by rotating tool can be executed by said inserts installed on said main body without exchanging tools.

In the invention of claim 10, turning machining is possible with the insert for turning machining installed on the main body and drilling machining is possible with the insert for drilling machining. Then, both turning and drilling machining can be executed without tool exchange, and efficient machining is possible, saving trouble and time for tool exchange.

The invention of claim 11 is the complex tool as set forth in claim 9 or 10, wherein said insert is provided being free to attach to and detach from said main body.

In the invention of claim 11, the insert is attachably and detachably provided. Then, worn or damaged insert can be easily exchanged, and it is very convenient on its maintenance.

The invention of claim 12 is the complex tool as set forth in claim 9 or 10, wherein said insert for turning machining also serves as said insert for milling machining.

In the invention of claim 12, the insert for turning machining also serves as the insert for milling machining. Then, more kinds of machining is possible with small numbers of inserts.

The invention of claim 13 is the complex tool as set forth in claim 9 or 10, wherein said insert for turning machining also serves as said insert for drilling machining.

In the invention of claim 13, the insert for turning machining also serves as the insert for drilling machining. Then, more kinds of machining is possible with small numbers of inserts.

### BRIEF DESCRIPTION OF THE DRAWINGS

- Fig. 1: is a control block diagram showing an example of a complex tool according to present invention and a complex machining machine tool to which the complex tool is applied;
- Fig.2: is a view for showing an example of the present complex tool, (a) is a front view, (b) is a view seen from arrow I of (a) and (c) is a view seen from arrow J of (a);
- Fig.3: is a schematic view obliquely showing an example of the present complex tool;
- Fig.4: is a schematic view for showing drilling machining when the complex tool according to the present invention is used;
- Fig.5: is a schematic view for showing turning drilling machining when the complex tool according to the present invention is used;
- Fig.6: is a schematic view for showing end milling machining when the complex tool according to the present invention is used;
- Fig.7: is a schematic view for showing turning rough machining of outer diameter when the complex tool according to the present invention is used;
- Fig.8: is a schematic view for showing turning rough machining of end face of outer diameter when the complex tool according to the present invention is used;
- Fig.9: is a schematic view for showing turning rough machining of end face of outer diameter when the complex tool according to the present invention is used;
- Fig.10(a): is a schematic view for showing groove machining of outer diameter and
- Fig.10(b): is a schematic view for showing screw machining of outer diameter when the complex tool according to the present invention is used;
- Fig. 11(a): is a schematic view for showing groove machining of inner diameter and
- Fig. 11(b): is a schematic view for showing screw machining of inner diameter when the complex tool according to the present invention is used;
- Fig. 12: is a schematic view for showing groove machining of outer diameter when the complex tool according to the present invention is used; and
- Fig. 13: is a schematic view for showing recess machining when the complex tool according to the present invention is used.

### DESCRIPTION OF THE PREFERRED EMBODIMENTS

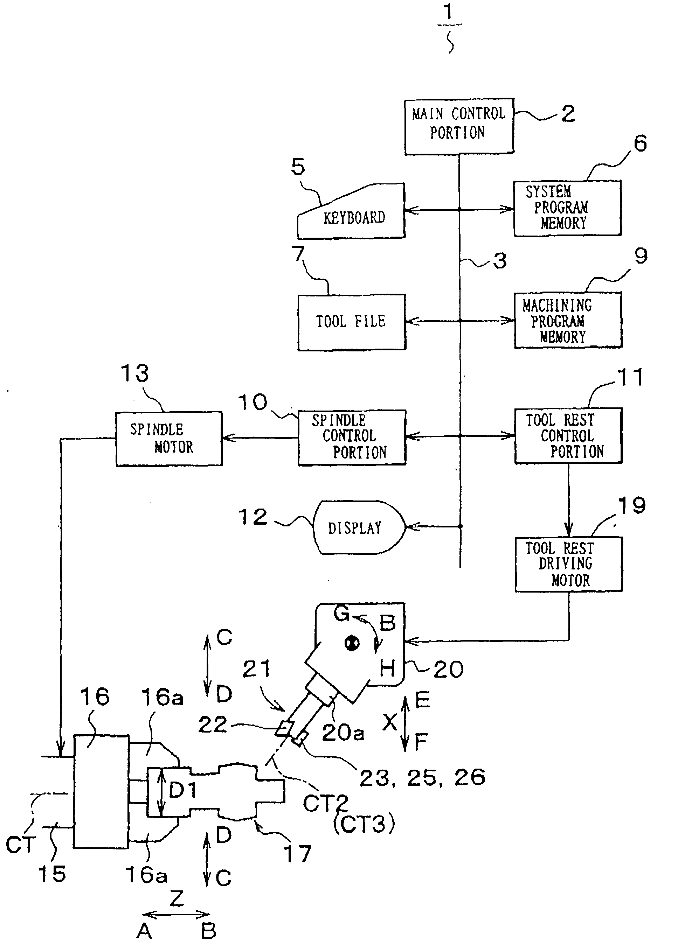

Fig. 1 is a control block diagram showing an example of a complex machining machine tool to which the present complex tool is applied.

A complex machining machine tool 1 has a main control portion 2, as shown in Fig.1. With the main control portion 2, an input portion, such as a keyboard 5, a system program memory 6, a tool file 7, a machining program memory 9, a spindle control portion 10, a tool rest control portion 11 and a display 12 are connected through a bus line 3. A spindle motor 13 is connected with the spindle control portion 10. With the spindle motor 13, a spindle 15, being free to rotate, drive and position with axial center CT provided parallel to a direction as shown by arrows A and B, that is, Z-axis as its center is connected. With the spindle 15, a chuck 16, which is an example of means for installing a workpiece, is provided. Claws 16a, 16a are provided with the chuck 16, being free to hold and release a workpiece 17 to be machined having an outer diameter D1, being free to move and drive in a direction as shown by arrows C and D.

Tool rest driving motors 19 (the plural number) are connected with the tool rest control portion 11. A tool rest 20 is connected with the tool rest driving motor 19, being free to move and drive in the Z-axis direction and in the direction as shown by arrows E and F rectangular to the Z-axis, that is, in the X-axis direction by the tool rest driving motors 19.

Furthermore, the tool rest 20 is provided, being free to move and drive in Y-axis direction rectangular to the X-axis and Z-axis, and rectangular to the paper, and in the direction as shown by arrows G and H which is B-axis direction with the Y-axis as its center by the tool rest driving motors 19.

A tool holding portion 20a is formed on the tool rest 20. A turning tool or a complex tool 21 according to the present invention (described hereinafter in detail), capable of milling/drilling machining is provided with the tool holding portion 20a, being free to attach, detach and exchange. The tool holding portion 20a is provided, being free to fix and hold the complex tool and other tools in a predetermined holding state, and being free to rotate, drive and position around rotational axis (axial center) CT2. When a main body 21a of the complex tool is installed in the tool rest 20, the installation is executed so as to correspond the rotational axis (axial center) CT2 of the tool rest and an axial center of the main body (also corresponds to "an axial center of the complex tool") CT3 with each other.

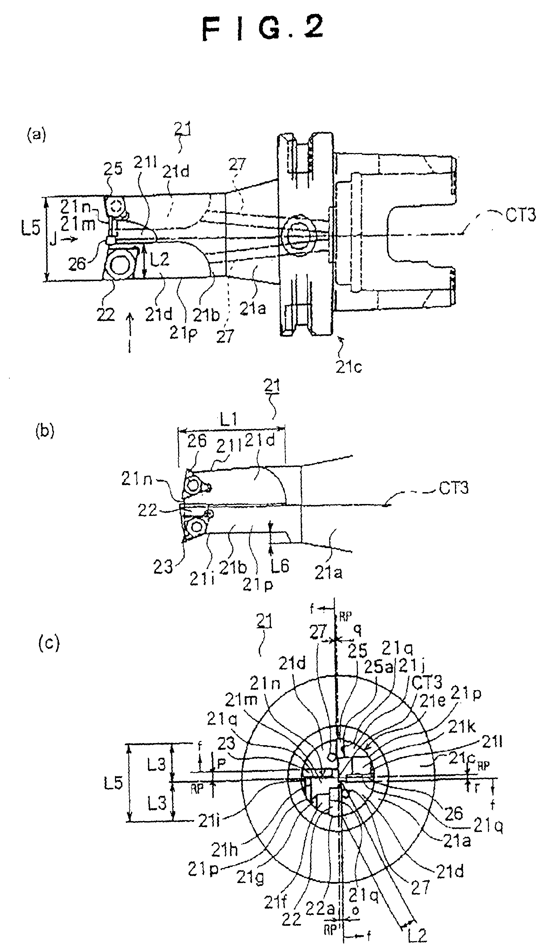

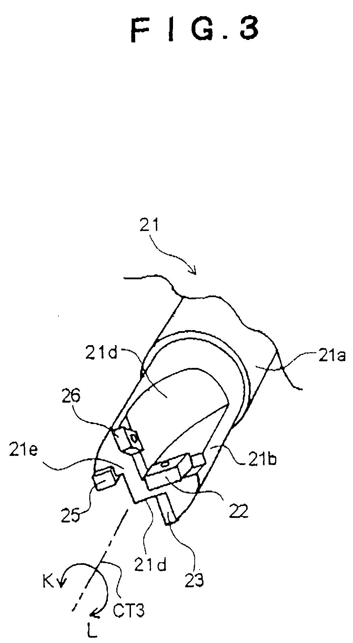

Fig.2 is a view for showing an example of the present complex tool, (a) is a front view, (b) is a view seen from arrow I of (a) and (c) is a view seen from arrow J of (a). And, Fig.3 is a schematic view obliquely showing an example of the present complex tool.

As shown in Fig.2 and Fig.3, the complex tool 21 has the main body 21a in a round bar shape, taperingly formed on the right hand side of Fig.2(a). The main body 21a has an engagement portion 21c (the right hand from near the center of Fig.2(a)) in almost disc shape, and in almost U shape in its side, for engaging the complex tool 21 with the tool holding portion 20a of the complex machining machine tool 1 so as to install. At the top end of the main body 21a, an insert installation portion 21b is formed.

Concave portions ("chip pockets" hereinafter) 21d, 21d are provided with the insert installation portion 21b along the axial center CT3 of the main body 21a from top end 21n of the main body 21a with distance L1. Each chip pocket 21d is provided, forming L character of groove with depth L2 from a main body outer peripheral portion 21p near the insert installation portion 21b. The chip pocket 21d is formed in such a manner that its depth l2 is made smaller with approaching a base portion of the main body 21a, that is, with approaching the right hand of Fig.2(a). And, the chip pockets 21d, 21d are formed on two portions at the pitch of about 90° with the axial center CT3 of the main body 21a as its center with almost point symmetry, as shown in Fig.2(c). Besides, insert installation faces 21q are formed on the main body 21a of the top end of the insert installation portion 21b, putting each chip pocket 21d therebetween. Four inserts 22, 23, 25, 26 are installed on the respective installation faces 21q being free to attach and detach so as to face the chip pockets 21d, 21d.

The inserts 22, 25 of the four inserts 22, 23, 25, 26 are located in such a manner that perpendicular force f acting on a surface of the side facing the chip pocket 21d generates left rotation with the axial center CT3 of Fig.2(c) as its center. And, the inserts 23, 26 are located in such a manner that perpendicular force f acting on the surface of the side facing the chip pocket 21d generates right rotation with the axial center CT3 of Fig.2(c) as its center. That is, the inserts 22, 25 and the inserts 23, 26 are respectively located in such a manner that respective cutting directions are opposite to each other. With respect to the inserts 22 and 26, the inserts 23 and 25, which are respectively located at one same chip pocket 21d, 21d facing each other, the cutting directions of these inserts 22 and 26, the inserts 23 and 25 are opposite to each other.

The inserts 22, 25, located on the different chip pocket 21d, having the same cutting direction are installed in such a manner that the distance between top end 22a of outer peripheral portion and the axial center CT3 and the distance between top end 25a of outer peripheral portion and the axial center CT3 are both distance L3, as shown in Fig.2(c). By doing so, the top end 22a of the insert 22 and the top end 25a of the insert 25 can be rotated on a locus of a concentric circle by rotating the complex tool 21 around the axial center CT3. Then, twice cutting can be executed by the inserts 22, 25 for one rotation in drilling machining or milling machining, for instance, then machining efficiency can be improved.

As shown in Fig.2(c), recesses are formed on the peripheral portions of the inserts 22, 23, 25, 26 so as to cope with each machining. A recess 21f, being gradually inclined from the top end 21n of the main body 21a to the directions for the root (the innermost direction of the paper of the figure) of the complex tool 21 and the outer peripheral portion 21q of the main body, is formed on the installation face 21q side of the insert 22. Furthermore, a recess 21g is provided with the recess 21f, being inclined to the outer peripheral portion 21p of the main body 21a, continuing to the recess 21f.

A recess 21h, being gradually inclined from the top end 21n of the main body 21a to the directions for the root (the innermost direction of the paper of the figure) of the complex tool 21 and the outer peripheral portion, is formed on the installation face 21q side of the insert 23. Furthermore, a recess 21i, wherein the outer peripheral portion 21p of the main body 21a is offset a predetermined quantity L6, is formed on the outer periphery side of the recess 21h, as shown in Fig.2(b).

A recess 21j, being gradually inclined from the top end 21n of the main body 21a to the directions for the root (the innermost direction of the paper of the figure) of the complex tool 21 and the outer peripheral portion 21p, is formed on the installation face 21q side of the insert 25.

A recess 21k, being gradually inclined from the top end 21n of the main body 21a to the directions for the root (the innermost direction of the paper of the figure) of the complex tool 21 and the outer peripheral portion 21p, is formed on the installation face 21q side of the insert 26. Furthermore, a recess 211 is formed, notching the outer peripheral portion 21p in a part, as shown in Fig.2(a).

Furthermore, a recess 21m, having concave shape with the vicinity of the axial center CT3 of the central portion of the main body 21a as its center, is formed on the surface of the top end 21n of the main body 21a, being surrounded by the four inserts 22, 23, 25, 26. Then, the interference of the respective inserts 22, 23, 25, 26 with respect to the workpiece 17 at the time of each machining can be effectively saved.

And, the respective inserts 22, 23, 25, 26 are located in order to secure the thickness of an insert supporting portion 21e (the portion sandwiched between the chip pockets 21d, 21d) by which the inserts are supported through the insert installation face 21q, especially the thickness of the periphery of the axial center CT3 of the main body, in such a manner that each tool edge offsets predetermined quantity in a direction for making thickness of the insert supporting portion 21e bigger, that is, in the direction of the chip pocket 21d from a radial face with the axial center CT3 as its center, as shown in Fig.2(c). That is, the insert 22 is located, offsetting distance o with respect to the radial face RP with the axial center CT3 as its center, and in a similar way, distance p for the insert 23, distance q for the insert 25, and distance r for the insert 26.

Offsetting of the tool edge with respect to the axial center CT3 which is the center of the tool has caused the problem, such as dimensional error after machining in the past since it is difficult to correctly contact the tool edge with the workpiece. But, by moving the tool rest 20 the above-mentioned offset quantity in the Y-axis direction so as to position, the tool edge can be positioned at a proper position corresponding to the center of the workpiece (Z-axis). Then, wider thickness of the vicinity of the axial center CT3 of the insert supporting portion 21e can be secured, and the strength with respect to turning resistance can be obtained. Therefore, the complex tool 21 can be made smaller.

At the time of drilling machining, the hole of the diameter bigger than one of the main body 21a is machined by helical machining with the complex tool 21 rotating and spirally moving. But, the tool edge of the insert 22 or 25 is elongated to the axial center CT3 and the main body 21a is rotated by making use of the inserts 22, 25 which tool edges 22a and 25d are located with equal distance from the axial center CT3, so that a hole having diameter equal to distance L5 between the inserts 22 and 25, almost equal to the main body 21a can be machined similar to the case wherein a drill which nominal diameter is L5 is used.

Holes 27, 27 for adding cutting oil from almost central portion of the inner diameter side of the engagement portion 21c on the inclined faces of the chip pockets 21d, 21 are provided with the complex tool 21. Then, cutting oil can be added in the present complex tool 21 during the machining, such as inner diameter machining wherein it is difficult to add cutting oil. Besides, the holes 27, 27 are not formed on the top end portions of the insert installation portion 21b, but in the chip pockets 21d, 21, so that the strength of the top end portions can be secured. As the result, the complex tool 21 can be made smaller.

As explained heretofore, the diameter of the present complex tool 21 can be made smaller. Then, stability at the time of high speed rotation can be improved. Besides, drilling/milling machining can be also executed since inner diameter machining on small diameter and high speed rotation are possible.

Since the present complex tool 21 has the above-mentioned structure, a plurality of machining can be executed by installing this in the complex machining machine tool 1. Methods of machining with the present complex tool 21 will now be explained hereinafter, referring to the drawings.

When machining is executed using the present complex tool 21 as shown in Fig.1, an operator firstly inputs machining data by a method of known automatic programming by operating the keyboard 5 so as to compose machining program. On this occasion, the main control portion 2 composes machining program on the basis of the machining data input by an operator according to a known automatic program stored in the system program memory 6, and the machining program composed is stored in the machining program memory 9.

After the machining program concerning the workpiece 17 is composed, an operator instructs the main control portion 2 to machine the workpiece 17 through the keyboard 5. Receiving this, the main control portion 2 reads out the machining program concerning the workpiece 17 from the machining program memory 9 so as to machine, appropriately driving the spindle control portion 10 and the tool rest control portion 11.

The tool to be used at this time is designated by the machining program. After the tool to be used is designated by the machining program, the main control portion 2 refers to the tool file 7 and reads out the tool data of the corresponding tool. In the tool file 7, the tool data necessary for machining is set for each tool as chart data.

That is, for the complex tool 21, indexing angle around the axial center CT2 (CT3) of the tool holding portion 20a (A-axis) is designated every inserts 22, 23, 25, 26 according machining contents capable of machining by the complex tool 21 in this tool file 7. By this A-axis indexing angle, the complex tool 21 is rotated and driven a predetermined A-axis angle from origin angular position around the axial center CT2 of the tool holding portion 20a of the tool rest 20 (in the direction as shown by arrows K and L of Fig.3), thereby the insert is selected and the insert 22, 23, 25 or 26 to be used for future machining is positioned at a predetermined position with respect to the workpiece.

Besides, B-axis indexing angle at the time of machining with the inserts 22, 23, 25, 26 is stored every machining contents of the respective inserts 22, 23, 25, 26 in the tool file 7. In the state that the predetermined insert is selected by the A-axis angle indexing, the selected insert is rotated around the B-axis at this time so as to index concerning the B-axis angle by this B-axis indexing angle. And, the insert is rotated and moved in the direction as shown by arrows G and H in the plane parallel to the X-Z plane so as to position the selected insert at the position fit to the machining to be executed from now on.

The A-axis indexing angle and the B-axis indexing angle are thus designated in the tool file 7, thereby the tool installing a plurality of inserts 22, 23, 25, 26 is appropriately selected so as to provide for machining.

The tool rest control portion 11 drives a tool exchanger (not shown) and selects the complex tool 21 from a tool magazine (not shown) so as to install on the tool rest 20. After the complex tool 21 is installed on the tool rest 20, the tool rest control portion 11 refers to detailed data of the tool of corresponding insert concerning the tool (insert) of the complex tool 21 designated in the machining program from the tool file 7 so as to read out the A-axis indexing angle and the B-axis indexing angle.

The tool rest control portion 11 drives and controls a tool driving motor (not shown) built in the tool rest on the basis of the A-axis indexing angle and the B-axis indexing angle, which are read out so as to rotate the complex tool 21 around the axial center CT3. Then, the insert 22, 23, 25 or 26 to be used for machining is selected and positioned. Besides, the B-axis driving motor is driven and the tool rest 20 is moved and driven in the direction as shown by the arrows G and H so as to position the selected insert at a predetermined position.

Thereafter, the spindle 15 is rotated and driven at predetermined rotational numbers by the spindle driving motor 13 so as to let the workpiece 17 be in rotating state or the tool holding portion 20a is rotated and driven around the axial center CT2 by the tool driving motor so as to let the complex tool 21 be in rotating state. And, machining is executed according to the machining program as mentioned before, appropriately driving the workpiece 17 through the spindle control portion 10 and the complex tool 21 through the tool rest control portion 11.

As mentioned before, the insert 22, 23, 25 or 26 of the complex tool 21 is indexed and positioned at a predetermined A-axis indexing angle by the complex machining machine tool 1 so as to select. Furthermore, the complex tool 21 is indexed and positioned at the B-axis indexing angle so as to locate the selected insert at a predetermined machining position with respect to the workpiece. And, the tool rest 20 is appropriately driven in the X direction and in the Z direction and the rotational number and the rotational direction of the workpiece 17 or the complex tool 21 is controlled and driven, so that a plurality of machining can be executed.

That is, tool exchange time for turning machining and drilling/milling machining, used to be necessary in the past can be saved since a plurality of kinds of turning machining and drilling/milling machining can be executed with one complex tool 21.

Besides, it is necessary to separately prepare a tool for turning machining and a tool for drilling/milling machining in the past. But, it is sufficient to prepare only one present complex tool 21. Then, the cost of tools can be decreased when a plurality of machining is necessary.

Embodiments when the complex tool 21 of the present invention is used will now be explained hereinafter, referring to the drawings.

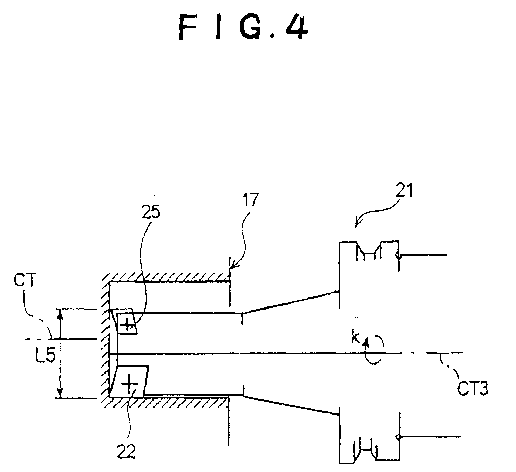

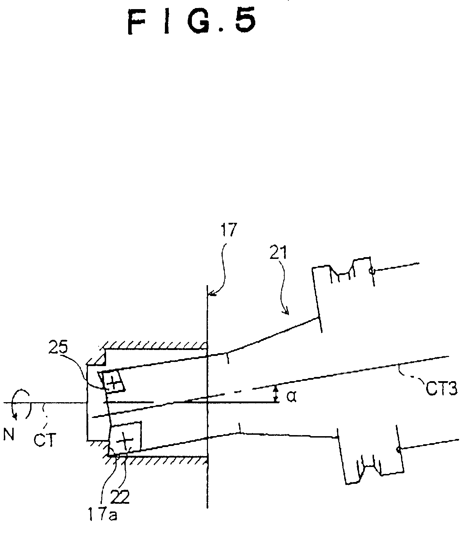

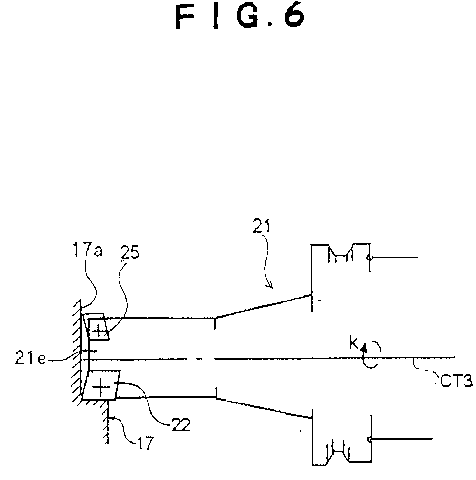

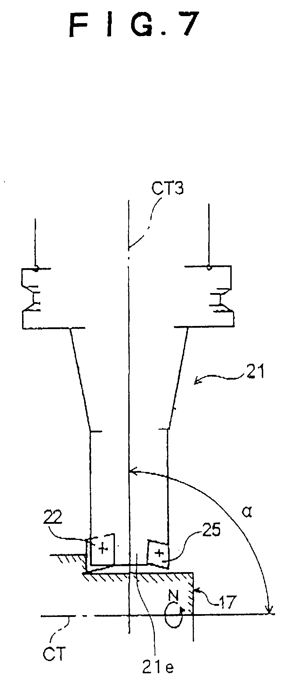

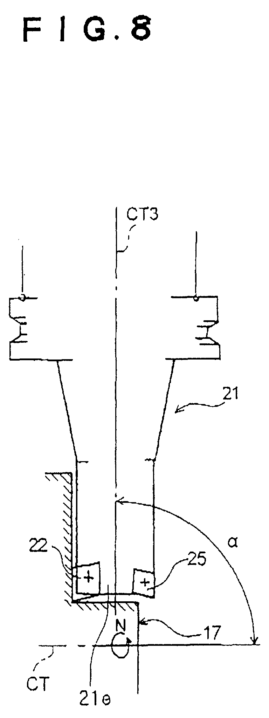

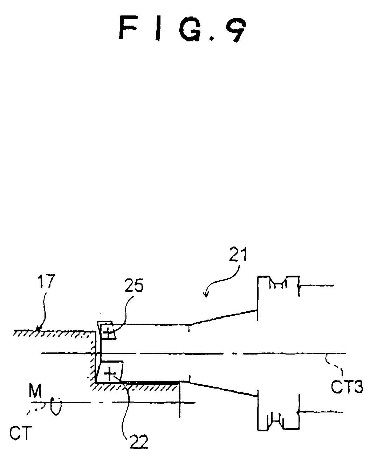

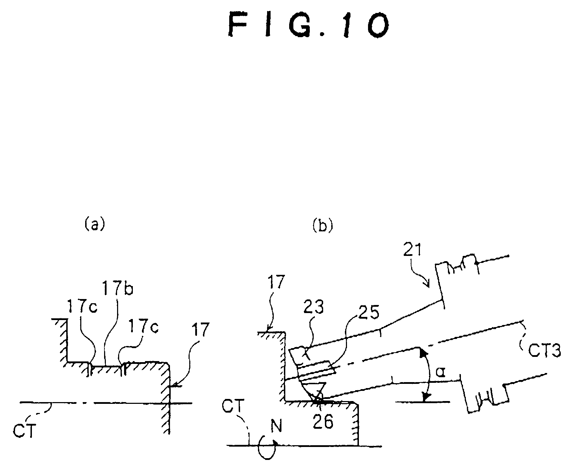

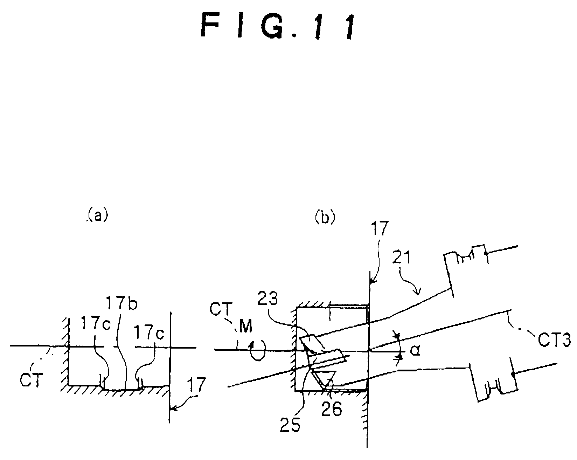

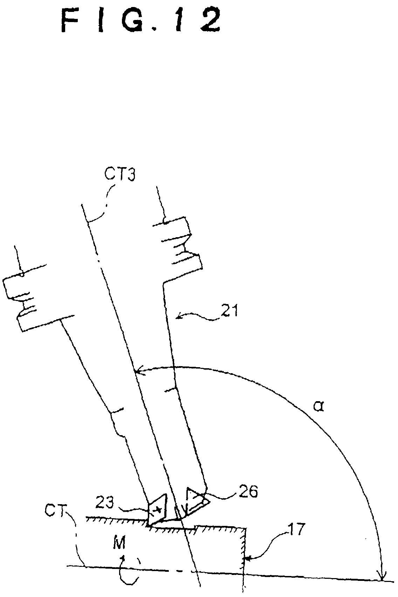

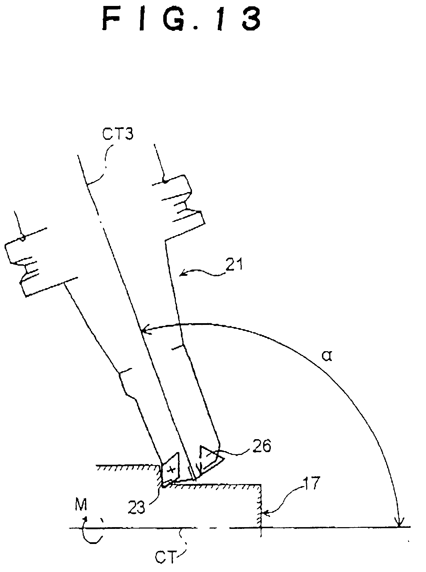

Fig.4 is a schematic view for showing drilling machining when the complex tool according to the present invention is used. In a similar way hereinafter, Fig.5 is a schematic view for showing turning drilling machining. Fig.6 is a schematic view for showing end milling machining. Fig.7 is a schematic view for showing turning rough machining of outer diameter. Fig.8 and Fig.9 are schematic views for showing turning rough machining of end face of outer diameter. Fig.10(a) is a schematic view for showing recessing machining of outer diameter. Fig.10(b) is a schematic view for showing screw machining of outer diameter. Fig.11(a) is a schematic view for showing groove machining of inner diameter. Fig.11(b) is a schematic view for showing screw machining of inner diameter. Fig.12 is a schematic view for showing groove machining of outer diameter. Fig.13 is a schematic view for showing recess machining for grinding.

When drilling machining is executed, the tool rest 20 is driven in the direction as shown by the arrows G and H by the B-axis driving motor so as to position in such a manner that the angle of the axial center CT3 is 0°(the angle of the axial center CT3 parallel to the axial center CT of the spindle 15 is 0°, hereinafter) according to the above-mentioned machining program, as shown in Fig.4. In such a state that the spindle 15 is fixed and held by the spindle control portion 10 and the workpiece 17 is fixed, the complex tool 21 is rotated around the axial center CT3 in the direction as shown by the arrow K at a predetermined rotational number. The relative position of the complex tool 21 with respect to the workpiece 17 is properly driven and moved by the tool rest control portion 11. Then, the workpiece 17 is drilled by the inserts 22, 25 so as to executed drilling machining. And, the top end portion of the insert support portion 21e of the main body 21a has the above-mentioned recesses 21f, 21g, 21j and the recess 21m which top end center is in concave shape. Then, machining can be executed without the interference between the workpiece 17 and the insert supporting portion 21e of the top end portion of the main body 21a. The complex tool 21 is properly driven and rotated around the axial center CT of the workpiece by the tool rest control portion 11, remaining as the B-axis angle of the axial center CT3 is 0° in such a state that the workpiece 17 is fixed and held so as to execute helical machining, thereby drilling machining can be executed on the diameter bigger than outer diameter L5 of the complex tool 21. On this occasion, chip due to cutting is eliminated outside through the chip pocket 21d.

When turning drilling machining is executed as shown in Fig.5, the B-axis angle α of the axial center CT3 of the complex tool 21 is positioned at 10°so as to fix the complex tool 21 and the workpiece 17 is rotated at a predetermined rotational number in the direction as shown by arrow N according to the machining program in a similar way. And, the complex tool 21 is properly driven and moved with respect to the workpiece 17. Then, the workpiece is turned by the insert 22 so as to execute turning drilling machining. And, the top end portion of the insert support portion 21e of the top end portion of the main body 21a has the above-mentioned recesses 21f, 21g and the recess 21m which top end center is in concave shape. Then, machining can be executed without the interference between a wall portion 17a of the workpiece 17 and the insert supporting portion 21e.

When end milling machining is executed as shown in Fig.6, the B-axis angle α of the axial center CT3 of the complex tool 21 is positioned at 0°so as to fix the workpiece 17 and the complex tool 21 is rotated at a predetermined rotational number in the direction as shown by arrow K according to the machining program in a similar way. And, the complex tool 21 is properly driven and moved with respect to the workpiece 17 in the X plane and in the Y plane in such a state that the B-axis angleα of the axial center CT3 is fixed at 0°. Then, the workpiece 17 is milled by the inserts 22, 25 so as to execute end milling machining. And, the top end portion of the insert support portion 21e has the above-mentioned recesses 21f, 21g, 21j and the recess 21m which top end center is in concave shape. Then, machining can be executed without the interference between the wall portion 17a of the workpiece 17 and the insert supporting portion 21e.

When turning rough machining of outer diameter is executed as shown in Fig.7, the insert 22 of the complex tool 21 is selected, and the B-axis angle α of the axial center CT3 of the complex tool 21 is positioned at 92°, for instance so as to fix the complex tool 21 and the workpiece 17 is rotated at a predetermined rotational number in the direction as shown by arrow N according to the machining program in a similar way. And, the complex tool 21 is properly driven and moved with respect to the workpiece 17. Then, the workpiece 17 is turned by the insert 22 so as to execute turning rough machining of outer diameter. When turning finishing machining of outer diameter is executed, the insert 25 is selected according to the machining program and the B-axis angle α of the axial center CT3 of the complex tool 21 is positioned at 92°so as to execute similarly. And, the top end portion of the insert support portion 21e of the main body 21a has the above-mentioned recesses 21f, 21g, 21j and the recess 21m which top end center is in concave shape. Then, machining can be executed without the interference between the workpiece 17 and the insert supporting portion 21e.

When turning rough machining of end face of outer diameter is executed as shown in Fig.8, the insert 22 is selected, and the B-axis angle α of the axial center CT3 of the complex tool 21 is positioned at 91°so as to fix the complex tool 21 and the workpiece 17 is rotated at a predetermined rotational number in the direction as shown by arrow N according to the machining program in a similar way. And, the complex tool 21 is properly driven and moved with respect to the workpiece 17. Then, the workpiece 17 is turned by the insert 22 so as to execute turning rough machining of end face of outer diameter. When turning finishing machining of end face of outer diameter is executed, the insert 25 is selected according to the machining program and the B-axis angle α of the axial center CT3 of the complex tool 21 is positioned at 91°so as to execute similarly. And, the top end portion of the insert support portion 21e has the above-mentioned recesses 21f, 21g, 21j and the recess 21m which top end center is in concave shape. Then, machining can be executed without the interference between the workpiece 17 and the insert supporting portion 21e of the main body 21a.

When turning rough machining of end face of outer diameter is executed as shown in Fig.9, the insert 22 is selected, and the B-axis angle α of the axial center CT3 of the complex tool 21 is positioned at 0°so as to fix the complex tool 21 and the workpiece 17 is rotated at a predetermined rotational number in the direction as shown by arrow M according to the machining program in a similar way. And, the complex tool 21 is properly driven and moved with respect to the workpiece 17. Then, the workpiece 17 is turned by the insert 22 so as to execute turning rough machining of end face of outer diameter. When turning finishing machining of end face of outer diameter is executed, the insert 25 is selected according to the machining program and the B-axis angle α of the axial center CT3 of the complex tool 21 is positioned at 0°so as to execute similarly. And, the top end portion of the insert support portion 21e has the above-mentioned recesses 21f, 21g, 21j and the recess 21m which top end center is in concave shape. Then, machining can be executed without the interference between the workpiece 17 and the insert supporting portion 21e.

When groove machining of outer diameter is executed as shown in Fig.10(a) or screw machining of outer diameter is executed as shown in Fig.10(b), the insert 26 is selected, and the B-axis angle α of the axial center CT3 of the complex tool 21 is positioned at 20°so as to fix the complex tool 21 and the workpiece 17 is rotated at a predetermined rotational number in the direction as shown by arrow N according to the machining program in a similar way. And, the complex tool 21 is properly driven and moved with respect to the workpiece 17 in the axial center CT direction. Then, the workpiece 17 is turned by the insert 26 so as to execute groove machining of outer diameter or screw machining of outer diameter. At the time of groove machining of outer diameter, both end portions 17c, 17c of a groove 17b can be chamfered by the shape of the insert 26 at the same time of turning. And, the top end portion of the insert support portion 21e has the above-mentioned recesses 21k, 21l and the recess 21m which top end center is in concave shape. Then, machining can be executed without the interference between the workpiece 17 and the insert supporting portion 21e.

When groove machining of inner diameter is executed as shown in Fig. 11(a) or screw machining of inner diameter is executed as shown in Fig. 11(b), the insert 26 is selected, and the B-axis angle α of the axial center CT3 of the complex tool 21 is positioned at 20°so as to fix the complex tool 21 and the workpiece 17 is rotated at a predetermined rotational number in the direction as shown by arrow M according to the machining program in a similar way. And, the complex tool 21 is properly driven and moved with respect to the workpiece 17. Then, the workpiece 17 is turned by the insert 26 so as to execute groove machining of inner diameter or screw machining of inner diameter. At the time of groove machining of inner diameter, both end portions 17c, 17c of the groove 17b can be chamfered by the shape of the insert 26 at the same time of turning. And, the top end portion of the insert support portion 21e has the above-mentioned recesses 21k, 211 and the recess 21m which top end center is in concave shape. Then, machining can be executed without the interference between the workpiece 17 and the insert supporting portion 21e.

When groove machining of outer diameter is executed as shown in Fig. 12, the insert 23 is selected, and the B-axis angle α of the axial center CT3 of the complex tool 21 is positioned at 110° so as to fix the complex tool 21 and the workpiece 17 is rotated at a predetermined rotational number in the direction as shown by arrow M according to the machining program in a similar way. And, the complex tool 21 is properly driven and moved with respect to the workpiece 17. Then, the workpiece 17 is turned by the insert 23 so as to execute groove machining of outer diameter. And, the top end portion of the insert support portion 21e has the above-mentioned recesses 21h, 21i and the recess 21m which top end center is in concave shape. Then, machining can be executed without the interference between the workpiece 17 and the insert supporting portion 21e of the main body 21a.

When recess machining is executed as shown in Fig. 13, the insert 23 is selected, and the B-axis angle α of the axial center CT3 of the complex tool 21 is positioned at 105° so as to fix the complex tool 21 and the workpiece 17 is rotated at a predetermined rotational number in the direction as shown by arrow M according to the machining program in a similar way. And, the complex tool 21 is properly driven and moved with respect to the workpiece 17. Then, the workpiece 17 is turned by the insert 23 so as to execute recess machining. And, the top end portion of the insert support portion 21e has the above-mentioned recesses 21h, 21i and the recess 21m which top end center is in concave shape. Then, machining can be executed without the interference between the workpiece 17 and the insert supporting portion 21e.

The above-mentioned embodiments refer to a plurality of machining with the complex tool 21. But, another machining can be executed by properly selecting the insert and properly setting the B-axis angle α of the axial center CT3 as long as the other inserts do not interfere with the insert in use, in addition to the above-mentioned machining embodiments.

Besides, in the above-mentioned embodiments, the insert and the B-axis angle α of the axial center CT3 are automatically positioned according to the machining program. But, manually controlled positioning is also possible.

Although the insert installed on each insert installation face 21q, located facing each chip pocket 21d is one in the above-mentioned embodiments, two or more may be located in addition to one.

The present invention is explained on the basis of the embodiment heretofore. The embodiments which are described in the present specification are illustrative and not limiting. The scope of the invention is designated by the accompanying claims and is not restricted by the descriptions of the specific embodiments. Accordingly, all the transformations and changes belonging to the claims are included in the scope of the present invention.

## Claims

1. Complex tool to be installed on a machine tool capable of executing turning machining and milling machining, comprising:
- a main body in a bar shape, installing inserts on its top end being free to attach and detach;
- a concave portion formed on said main body from an outer peripheral portion of said main body in a direction of an axial center of said main body along said axial center direction from a top end portion of said main body;
- a plurality of insert installation faces formed on said main body, putting said concave portion therebetween; and
- said insert installed on said insert installation face.

2. The complex tool as set forth in claim 1, wherein a plurality of said concave portions is formed.

3. The complex tool as set forth in claim 1, wherein said inserts located putting said concave portion therebetween are installed on said insert installation portions such that both cutting directions are opposite to each other.

4. The complex tool as set forth in claim 1, wherein a recess is formed on said main body for said insert.

5. The complex tool as set forth in claim 2, wherein at least two inserts having the same cutting direction, of a plurality of said inserts located on a plurality of said concave portions are provided such that their top edges are located with equal distance with respect to said axial center of said main body.

6. The complex tool as set forth in claim 2, wherein said insert is located such that a top edge of said insert offsets to said concave portion side a predetermined distance from a radial face with said axial center of said main body as its center.

7. The complex tool as set forth in claim 4, wherein a plurality of said recesses is formed per one insert.

8. The complex tool as set forth in claim 4, wherein said recesses include a recess formed on said top end of said main body, hollowing a central portion of said main body.

9. A complex tool to be installed on a machine tool capable of executing turning machining and milling or drilling machining, comprising:
- a main body;
- an insert for turning machining installed on said main body; and
- an insert for milling or drilling machining installed on said main body;
- whereby both turning machining and milling or drilling machining can be executed by said inserts installed on said main body without exchanging tools.

10. The complex tool as set forth in claim 9, wherein said insert is provided being free to attach to and detach from said main body.

11. The complex tool as set forth in claim 9, wherein said insert for turning machining also serves as said insert for milling or drilling machining.
